## Europäisches Patentamt
## European Patent Office
## Office européen des brevets

(19)

(11) Veröffentlichungsnummer : **0 367 913 B1**

(12)

# EUROPÄISCHE PATENTSCHRIFT

(45) Veröffentlichungstag der Patentschrift :
**22.04.92 Patentblatt 92/17**

(51) Int. Cl.⁵ : **B66F 9/07**, B23Q 7/10

(21) Anmeldenummer : **89114486.7**

(22) Anmeldetag : **05.08.89**

(54) **Vorrichtung zur Einlagerung und Entnahme von Werkstücken bei einem Lagerregal.**

(30) Priorität : **10.10.88 DE 3834397**

(43) Veröffentlichungstag der Anmeldung :
**16.05.90 Patentblatt 90/20**

(45) Bekanntmachung des Hinweises auf die
Patenterteilung :
**22.04.92 Patentblatt 92/17**

(84) Benannte Vertragsstaaten :
**CH DE FR GB IT LI**

(56) Entgegenhaltungen :
**WO-A-85/01493**
**CH-A- 538 402**
**DE-A- 3 309 190**
**DE-A- 3 440 456**
**DE-C- 1 235 560**
**FR-A- 2 110 242**
**US-A- 3 840 131**

(73) Patentinhaber : **STOPA STAHLBAU GMBH &
CO. KOMMANDITGESELLSCHAFT FÜR
SCHWEISSTECHNIK
Industriestrasse 12
W-7590 Achern-Gamshurst (DE)**

(72) Erfinder : **Stolzer, Paul
Franz-Xaver-Lender-Strasse 16
W-7590 Achern (DE)**

(74) Vertreter : **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1 (DE)**

Jouve, 18, rue Saint-Denis, 75001 PARIS

## Beschreibung

Die Erfindung betrifft ein Lagerregal mit Einlagerungsund Entnahmevorrichtung von Werkstücken bei fluchtend übereinander gelegenen Fächern des Lagerregals, wobei parallel zu einer Regalseite mit Abstand ein Rahmen aus zwei vertikalen Ständern und diese oben und/oder unten verbindenden Balken gebildet ist, wobei ferner an den Ständern eine horizontale Lasttraverse vertikal verfahrbar ist, die in Richtung auf das Regal weisende Lastaufnahmemittel für die Werkstücke trägt, und wobei der Rahmen bei Aufrechterhaltung seiner Vertikallage über an ihm drehbar befestigte Räder entlang sich zueinander parallel senkrecht vom Regal fort horizontal erstreckender Bewegungsbahnen auf das Regal zu und von diesem fort verfahrbar ist.

Ein derartiges Lagerregal ist durch WO-A 8 501 493 bekannt. Dabei ist der Rahmen an seiner Unterseite mit einem Fahrwerk versehen, das sich von ihm ausgehend in seine beiden Fahrtrichtungen erstreckt. Der Rahmen bildet also zusammen mit dem Fahrwerk ein Profil in Form eines auf dem Kopf stehenden T, was dazu erforderlich ist, den Rahmen ausreichend in seiner aufrechten Lage zu stabilisieren. Dies bedingt jedoch, daß der Rahmen mit dem Fahrwerk jeweils in das Regal unten eintauchen muß, auf das er zugefahren wird. Hierdurch geht Lagerplatz verloren. Außerdem ist die bekannte Vorrichtung äußerst schwer gebaut, um auch dann stabil zu sein, wenn der Rahmen im Bereich seines oberen Endes eine Last aufzunehmen hat und dadurch entsprechend unter Kippbelastung steht.

Andererseits ist durch die US-A-3 840 131 ein Lagerregal bekannt, bei dem ein sich vom Lagerregal fort erstreckender Rahmen neben dem Lagerregal angeordnet und parallel zu dessen Vorderseite verfahrbar ist. Dabei wird die Fahrbewegung des Rahmens sowie die Aufrechterhaltung seiner vertikalen Stellung durch auf der regalabgewandten Seite oben und unten am Rahmen angebrachte Paare von Rollen gewährleistet, über die gegenläufige, sich zwischen den Rollen überkreuzende Seile geführt sind, die außerhalb des Fahrbereichs des Rahmens am Lagerregal befestigt sind.

Bei dieser Einrichtung ist also der Rahmen bezüglich seines Abstandes gegenüber dem Regal unveränderbar, während die Lastaufnahmemittel horizontal ausfahrbar beziehungsweise längenänderbar sind, so daß sie mit oder ohne Werkstück in das Regal eintauchen oder aber sich auf den Gang zurückziehen können, der durch den Abstand des Rahmens gegenüber dem Regal gebildet ist. Diese Bauweise mit längerveränderbaren Lastaufnahmemitteln beispielsweise in Form von Teleskopgabeln bringt ein erhebliches Gewicht mit sich und ist platzgreifend und kompliziert, so daß sichdamit ein erheblicher Kostenaufwand verbindet.

Außerdem ist ungünstig, daß die Lastaufnahmemittel in ausgefahrenem Zustand, wenn sie also beispielsweise aus einem Regalfach ein Werkstück aufnehmen, einen Hebelarm erheblicher Länge bilden, was zusätzlich zu einer gesteigerten Stabilität der Lastaufnahmemittel einerseits sowie der sie tragenden Konstruktion andererseits zwingt.

Aufgabe der Erfindung ist es, eine Vorrichtung der eingangs genannten Art derart zu gestalten, daß unter Vermeidung der geschilderten Nachteile eine komplizierte und insbesondere längenänderbare Ausbildung der Lastaufnahmemittel nicht mehr erforderlich ist, womit insgesamt auch unter Einschluß des Rahmens eine leichtere, einfachere und damit kostengünstigere und wartungsfreundlichere Konstruktion geschaffen werden soll.

Diese Aufgabe ist erfindungsgemäß dadurch gelöst, daß der Rahmen im Bereich der oberen und unteren Enden beider Ständer je ein Paar von Umlenkrädern drehbar befestigt aufweist, daß jeweils alle oberen und alle unteren Umlenkräder um eine gemeinsame Achse drehbar sind, daß je ein erstes Rad der Paare von Umlenkrädern als Zahnrad ausgebildet ist, wobei die Zahnräder untereinander gleich sind und übereinander angeordnete Zahnräder in Vertikalrichtung miteinander fluchten sowie mit einer Zahnradkette in Eingriff sind, die die oberen Zahnräder im wesentlichen auf der regalzugewandten und die unteren Zahnräder im wesentlichen auf der regalabgewandten Seite umschlingt und mit ihrem unteren Ende horizontal auslaufend am Regal sowie mit ihrem oberen Ende horizontal auslaufend an einem bei maximaler Entfernung des Rahmens vom Regal auf der regalabgewandten Seite des Rahmens an Streben gelegenen ersten Teil ortsfest angeschlagen sind, daß die zweiten, untereinander gleichen Umlenkrädern, von denen übereinander angeordnete vertikal miteinander fluchten, mit einem Zugmittel in Eingriff sind, das die oberen Umlenkräder im wesentlichen auf der regalabgewandten und die unteren Umlenkräder im wesentlichen auf der regalzugewandten Seite umschlingt und seinem oberen Ende horizontal auslaufend am Regal sowie mit seinem unteren Ende horizontal auslaufend an einem bei maximaler Entfernung des Rahmens vom Regal auf der regalabgewandten Seite des Rahmens gelegenen zweiten Teil ortsfest angeschlagen sind, und daß die oberen oder die unteren Zahnräder mit einer gemeinsamen Welle drehverbunden sind.

Durch diese erfindungsgemäßen Maßnahmen ist sichergestellt, daß die Lastaufnahmemittel eine einfache, längenunveränderbare Ausbildung erhalten können, da ihr Eintauchen in die Regalfächer sowie ihr Ausfahren aus den Regalfächern durch die Verfahrbarkeit des Rahmens gegenüber dem Regal gewährleistet ist.

Diese Verfahrbarkeit des Rahmens ist ihrerseits durch eine äußerst einfache, mittels üblicher im Handel erhältlicher Bauteile hergestellte Konstruktion gewährleistet, die in technischer, insbesondere auch in steuerungstechnischer Hinsicht keinerlei besondere Anforderungen stellt und trotzdem vollkommen zuverlässig und exakt arbeitet. Insbesondere ist die Parallelität zwischen Rahmen und der ihm zugeordneten Seite des Regals gewährleistet und es besteht keine Möglichkeit für den Rahmen, aus der ihm ursprünglich gegebenen Vertikallage herauszukippen, da er gleichermaßen im Bereich seiner oberen und unteren Ecken zwangsgeführt ist.

Trotzdem hat sich durch die erfindungsgemäßen Merkmale eine äußerst leichte Bauweise für das insgesamte Regelbediengerät ergeben, wobei auch die äußeren Führungsmittel für den Rahmen denkbar einfach sind, denn sie können sich auf normale, durch auf dem Boden verlegte Profilschienen gebildete Laufbahnen für die Räder beschränken.

Bezüglich der neben den Zahnradketten vorhandenen Zugmittel hat sich als zweckmäßig erwiesen, diese als Seile auszubilden und ihnen als zweite Umlenkräder Seilrollen zuzuordnen.

Darüber hinaus ist es vorteilhaft, daß die Zugmittel am Regal oder am zweiten Teil unter Zwischenschaltung einer Zugfeder angeschlagen sind, um in einfacher Weise eine genügende Vorspannung der Zugmittel zu gewährleisten.

Sowohl die Zahnradketten als auch die Zugmittel beziehungsweise Seile weisen in ihrem im wesentlichen vertikal verlaufenden Teil zwischen oberen und unteren Umlenkrädern einen erheblichen Abschnitt auf, der bei den Fahrbewegungen des Rahmens nicht über die Umlenkräder geführt wird, folglich nicht flexibel ausgebildet sein braucht. Für diesen Teil ist es vorteilhaft, ihn als Stange auszubilden, wodurch sich die Konstruktion weiterhin vereinfacht und verbilligt.

Was die Fahrbewegungen des Rahmens betrifft, so können diese beispielsweise ausgehend von einem am Rahmen angebrachten Antriebsmotor in die Welle eingeleitet werden, die entweder die oberen oder die unteren Zahnräder drehfest miteinander verbindet. Es besteht jedoch beispielsweise auch die Möglichkeit, den Rahmen durch hydraulisch betätigte, an seinem Fuß angreifende Schub- oder Zugmittel zu bewegen.

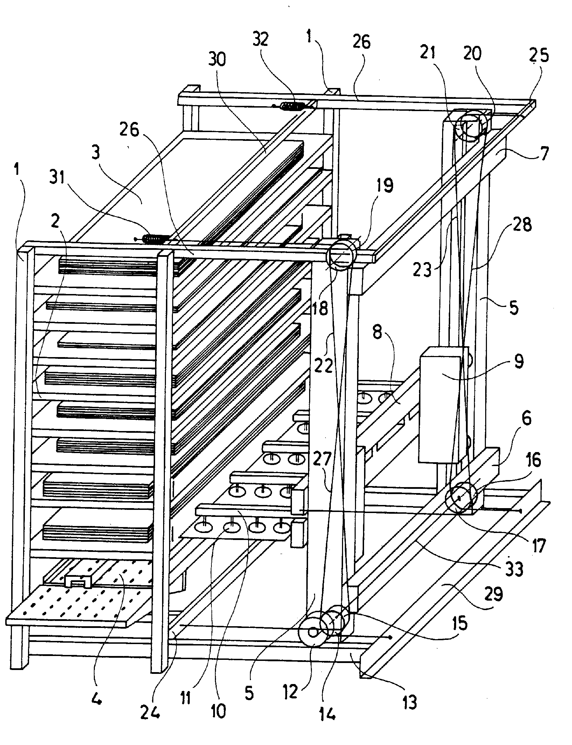

Weitere Merkmale und Einzelheiten der Erfindung ergeben sich aus der nachfolgenden Beschreibung einer Ausführungsform, die auf der Zeichnung dargestellt ist.

Die Zeichnung zeigt ein durch vier Ecksäulen 1 gebildetes Lagerregal mit Regalfächern 2 , auf denen Werkstücke, im vorliegenden Falle Pakete von Blechtafeln 3 liegen.

Ein unteres Fach des Lagerregals ist als Kugelrolltisch 4 ausgebildet, auf dem einzelne aus den Regalfächern 2 entnommene Blechtafeln abgelegt werden sollen, um durch nicht näher dargestellte Kippmöglichkeiten des Kugelrolltisches 4 für eine Weiterverarbeitung ausgerichtet und positioniert zu werden.

Zum Umsetzen der einzelnen Blechtafeln aus den Regalfächern 2 auf den Kugelrolltisch 4 dient ein Regalbediengerät. Dieses besteht im wesentlichen aus einem durch vertikale Ständer 5 und diese oben und unten verbindende Balken 6, 7 gebildeten Rahmen, wobei an den Ständern 5 eine Lasttraverse 8 mittels entständiger Schlitten 9 in nicht näher dargestellter, weil bekannter Weise vertikal verfahrbar ist. Die Lasttraverse 8 trägt auf ihrer dem Regal 1, 2 zugewandten Seite sich in Richtung auf das Regal erstreckende Lastaufnahmemittel 10, die im vorliegenden Falle als horizontale Arme ausgebildet sind, die über an ihrer Unterseite angeordnete Saugnäpfe 11 die einzelnen Blechtafeln aus den Fächern 2 aufnehmen können.

Zum Einfahren und Ausfahren der Lastaufnahmemittel 10 bezüglich der Regalfächer 2 ist der Rahmen 5, 6, 7 horizontal und senkrecht gegenüber der ihm zugewandten Regalseite unter Aufrechterhaltung seiner Vertikalstellung verfahrbar, wozu er mit unten auf der Außenseite der Ständer 5 drehbar befestigten Rädern 12 auf durch Schienen 13 gebildeten Bahnen rollt, die sich horizontal und in senkrechter Richtung vom Regal forterstrecken.

Um bei den Fahrbewegungen des Rahmens dessen Vertikallage sowie seine Parallelität gegenüber der ihm zugewandten Seite des Regals aufrechtzuerhalten, sind am Rahmen, hier an den Ständern 5 im Bereich deren oberer und unterer Enden je ein Paar von Umlenkrädern 14 bis 21 drehbar befestigt, wobei je ein zweites Rad der Paare von Umlenkrädern als Seilrollen 14, 16, 18, 20 ausgebildet ist, während die ersten Umlenkräder die Gestalt von Zahnrädern 15, 17, 19, 21 haben.

Die Räder 14, 16 einerseits und 18, 20 andererseits sind vertikal übereinander und miteinander fluchtend angeordnet und als untereinander gleiche Seilrollen ausgebildet, während die Räder 15, 17 einerseits und 19, 21 andererseits ebenfalls in Vertikalrichtung übereinander angeordnet und miteinander fluchtend, jedoch als untereinander gleiche Zahnräder ausgebildet sind.

Über die Zahnräder 15, 17, 19, 21 sind Zahnradketten 22, 23 geführt derart, daß sie die Räder 15, 17 im wesentlichen auf der regalabgewandten und die Räder 19, 21 im wesentlichen auf der regalzugewandten Seite umschlingen. Entständig sind die Zahnreadketten 22, 23 unten waagerecht auslaufend an einem Holm 24 des Regals 1 befestigt, während sie oben waagerecht auslaufend an einem ersten Teil 25 angeschlagen sind, das von mit dem Regal 1 verbundenen Streben 26 parallel zum Regal 1 und gegenüber dem Regal 1 in einem solchen Abstand ortsfest gehalten ist, der mit dem maximalen Abstand des Rahmens 5, 6, 7 gegenüber dem Regal 1 korrespondiert.

Über die Seilrollen 14, 18 einerseits und 16, 20 andererseits sind Seile 27, 28 derart geführt, daß sie die Rollen 14, 16 im wesentlichen auf der regalzugewandten und die Rollen 18, 20 im wesentlichen auf der regalabgewandten Seite umschlingen. Die Seile 27, 28 sind mit ihrem unteren Ende waagerecht auslaufend an einem zweiten Teil 29 ortsfest angeschlagen, das im wesentlichen senkrecht unterhalb des ersten Teiles 25, im vorliegenden Falle als Verbindung der Schienen 13 befestigt ist, während ihre oberen Enden waagerecht auslaufend an einem Holm 30 des Lagerregals 1 befestigt sind.

Die letztgenannte Befestigung geschieht über Zwischenschaltung von die Seile 27, 28 unter Vorspannung haltenden Federn 31, 32. Eine derartige Vorspannung ist für die Zahnketten 22, 23 nicht erforderlich, da diese durch das auf den Rahmen 5, 6, 7 wirkende Kippmoment vorgespannt gehalten werden, das durch die Lasttraverse 8, die Lastaufnahmemittel 10 und die daran hängende Last ausgeübt wird.

Bei dem in der Zeichnung dargestellten Beispiel sind die unteren Zahnräder 15, 17 drehfest mit einer Welle 33 verbunden. Dadurch ist sichergestellt, daß bei Fahrbewegungen des Rahmens 5, 6, 7 vermöge der untereinander gleichen Ausbildung der Zahnräder 15, 17, 19, 21 die unteren und oberen Ecken des Rahmens immer gleiche Bewegungsgrößen ausführen, so daß der Rahmen stets in seiner vertikalen und zu der ihm zugewandten Regalseite parallelen Lage bleibt. In gleicher Weise wirken die über die Seilrollen 14, 16, 18, 20 geführten Seile 27, 28, soweit der Rahmen 5, 6, 7 bezogen auf die zeichnerische Darstellung im Uhrzeigersinn schwenken will, was beispielsweise in Folge von bei den Fahrbewegungen auftretenden Beschleunigungskräften der Fall sein kann.

Die Einleitung der Fahrbewegung für den Rahmen 5, 6, 7 kann durch einen nicht dargestellten Drehantrieb für die Welle 33 erfolgen, wobei selbstverständlich in gleicher Weise eine solche Welle auch als Drehverbindung für die oberen Zahnräder 19, 21 vorgesehen und durch einen Fahrantrieb beaufschlagt sein kann.

Es besteht jedoch beispielsweise auch die Möglichkeit, den Rahmen 5, 6, 7 durch an ihm angreifende hydraulische Zylinderkolbenaggregate translatorisch zu bewegen.

Die Seile 27, 28 sowie die Zahnketten 22, 23 weisen in ihrem im wesentlichen vertikalen Bereich zwischen den oberen und unteren Umlenkrädern einen Abschnitt auf, der bei den Fahrbewegungen des Rahmens 5, 6, 7 nicht über die Umlenkräder läuft, folglich nicht flexibel ausgebildet zu sein braucht. Für diese Abschnitt kann es zweckmäßig sein, sie durch Stangen zu ersetzen, um die Konstruktion zu vereinfachen und zu verbilligen.

Weitere Ausgestaltungen des beschriebenen Gegenstandes können darin bestehen, daß anstelle der Seilrollen 14, 16, 18, 20 ebenfalls untereinander gleiche Zahnräder vorgesehen werden, für die das Umschlingungsmittel ebenfalls eine Zahnradkette ist. Sind diese Zahnräder gleich den Zahnrädern 15, 17, 19, 21, so können jeweils die Zahnradpaare 14, 15; 16, 17 etc. auch drehfest miteinander verbunden sein.

Eine solche Bauform eignet sich insbesondere für solche Fälle, bei denen auch auf der dem dargestellten Regal 1 gegenüberliegenden Seite ein weiteres Regal angeordnet und die Lasttraverse 8 beidseits mit Lastaufnahmemitteln 10 versehen ist.

Im übrigen kann bei allen Fällen unter der Voraussetzung der Anordnung der Welle 33 zwischen den Kettenzahnrädern 19, 21 der Balken 6 entfallen, um den Rahmen nach Art eines Portalkrans auszubilden, der die Unterflurförderung zuläßt. Hier ist es dann zweckmäßig, wenn die Räder 12 gegenüber den Schienen 13 zusätzlich mit einer Seitenführung versehen sind.

Die vorstehend beschriebene Konstruktion bietet einen in einfachster Weise exakt gegenüber dem Lagerregal verfahrbaren Rahmen 5, 6, 7 als Führung und Bewegungsträger für eine Lasttraverse 8 und daran befestigte Lastaufnahmemittel 10 an, wobei die Lastaufnahmemittel 10 keinerlei Stellfunktion mehr auszuüben brauchen und dadurch ebenfalls in einfachster Weise gestaltet sein können.

**Patentansprüche**

1. Lagerregal mit Einlagerungs- und Entnahmevorrichtung von Werkstücken (3) bei fluchtend übereinander gelegenen Fächern (2) des Lagerregals, wobei parallel zu einer Regalseite mit Abstand ein Rahmen (5, 6, 7) aus zwei vertikalen Ständern (5) und diese oben und/oder unten verbindenden Balken (6, 7) gebildet ist, wobei ferner an den Ständern (5) eine horizontale Lasttraverse (8) vertikal verfahrbar ist, die in Richtung auf das Regal weisende Lastaufnahmemittel (10) für die Werkstücke (3) trägt und wobei der Rahmen (5, 6, 7) bei Aufrechterhaltung seiner Vertikallage über an ihm drehbar befestigte Räder (12) entlang sich zueinander parallel senkrecht vom Regal (1) fort horizontal erstreckender Bewegungsbahnen (13) auf das Regal zu und von diesem fort verfahrbar ist,
dadurch gekennzeichnet,
daß der Rahmen im Bereich der oberen und unteren Enden beider Ständer (5) je ein Paar von Umlenkrädern (14, 15; 16, 17; 18, 19; 20, 21) drehbar befestigt aufweist, daß jeweils alle oberen und alle unteren Umlenkräder um eine gemeinsame Achse drehbar sind, daß je ein erstes Rad (15, 17, 19, 21) der Paare von Umlenkrädern als Zahnrad ausgebildet ist, wobei die Zahnräder untereinander gleich sind und übereinander angeordnete Zahnräder in Vertikalrichtung miteinander fluchten sowie mit einer Zahnradkette (22, 23) in Eingriff sind, die die oberen Zahnräder (19, 21) im wesentlichen auf der regalzugewandten und die unteren Zahnräder (15, 17) im wesentlichen auf der regalabgewandten Seite umschlingt und mit ihrem unteren Ende horizontal auslaufend am Regal (1) sowie mit ihrem oberen Ende horizontal auslaufend an einem bei maximaler Entfernung des Rahmens vom Regal auf der regalabgewandten Seite des Rahmens an Streben (26) gelegenen ersten Teil (25) ortsfest angeschlagen sind, daß die zweiten, untereinander gleichen Umlenkräder (14, 16, 18, 20), von denen übereinander angeordnete vertikal miteinander fluchten, mit einem Zugmittel (27, 28) in Eingriff sind, das die oberen Umlenkräder (18, 20) im wesentlichen auf der regalabgewandten und die unteren Umlenkräder (14, 16) im wesentlichen auf der regalzugewandten Seite umschlingt und mit seinem oberen Ende horizontal auslaufend am Regal (1) sowie mit seinem unteren Ende horizontal auslaufend an einem bei maximaler Entfernung des Rahmens vom Regal auf der regalabgewandten Seite des Rahmens gelegenen zweiten Teil (29) ortsfest angeschlagen sind, und daß die oberen (19, 21) und/oder die unteren (15, 17) Zahnräder mit einer gemeinsamen Welle (33) drehverbunden sind.

2. Lagerregal nach Anspruch 1,
dadurch gekennzeichnet,
daß die Räder (12) an den unteren Ecken des Rahmens (5, 6, 7) angeordnet und die Bewegungsbahnen als Laufschienen (13) für die Räder ausgebildet sind.

3. Lagerregal nach Anspruch 1,
dadurch gekennzeichnet,
daß die Zugmittel (27, 28) als Seile und die zweiten Umlenkräder (14, 16, 18, 20) als Seilrollen ausgebildet sind.

4. Lagerregal nach Anspruch 1,
dadurch gekennzeichnet,
daß die Zugmittel (27, 28) am Regal (1) oder am zweiten Teil (29) unter Zwischenschaltung einer Spannfeder (31, 32) angeschlagen sind.

5. Lagerregal nach Anspruch 1,
dadurch gekennzeichnet,
daß der im wesentlichen vertikal verlaufende und nicht von der Umlenkung über die Zahnräder (15, 17, 19, 21) und die Umlenkräder (14, 16, 18, 20) erfaßte Abschnitt der Ketten (22, 23) und der Zugmittel (27, 28) als Stange ausgebildet ist.

6. Lagerregal nach Anspruch 1, 4 oder 5,
dadurch gekennzeichnet,
daß die Zugmittel (27, 28) als Zahnradketten und die zweiten Umlenkräder (14, 16, 18, 20) als Kettenzahnräder ausgebildet sind.

## Claims

1. Storage shelving unit with a device for putting workpieces (3) into store and withdrawing them from store, with compartments (2) of the storage shelving unit placed in alignment one above another, where parallel to one shelving unit side and with spacing a frame (5, 6, 7) is formed from two vertical stands (5) and beams (6, 7) connecting these at the top and/or bottom, where further on the stands (5) a horizontal load cross-piece (8) is vertically mobile, which carries load take-up means (10) facing in the direction towards the shelving unit for the workpieces (3), and where the frame (5, 6, 7), while maintaining its vertical position, is driveable towards and away from the shelving unit by means of wheels (12) rotatably secured on it along movement paths (13) extending horizontally parallel to one another away from the shelving unit (1),
characterised in that
the frame comprises in the region of the upper and lower ends of the two stands (5) in each case a pair of rotatably secured reversing wheels (14, 15; 16, 17; 18, 19; 20, 21); in that in each case all upper and all lower reversing wheels are rotatable about a common axis, it that in each case a first wheel (15, 17, 19, 21) of the pairs of reversing wheels is formed as a toothed wheel, the toothed wheels being similar to one another and toothed wheels arranged one above the other being aligned with one another in the vertical direction and in engagement with a gear chain (22, 23) which loops around the upper toothed wheels (19, 21) substantially on the side facing the shelving unit and the lower toothed wheels (15, 17) substantially on the side facing away from the shelving unit, and are non-displaceably attached with their lower end, running out horizontally on the shelving unit (1) and with their upper end, running out horizontally on a first quart (25) placed on struts (26) on the side of the frame turned away from the shelving unit when the frame is at maximum distance from the shelving unit; in that the second, mutually alike reversing wheels (14, 16, 18, 20), of which those arranged one above the other are vertically mutually aligned, are in engagement with a traction means (27, 28) which loops around the upper reversing wheels (18, 20) essentially on the side facing away from the shelving unit and the lower reversing wheels (14, 16) essentially on the side facing the shelving unit, and with its upper end running out horizontally on the shelving unit (1) essentially on the side facing the shelving unit, and is non-displaceably attached with its upper end running out horizontally to a second part (29) placed on the side of the frame remote from the shelving unit; and in that the upper toothed wheels (19, 21) and/or the lower ones (15, 17) are connected for rotation with a common shaft (33).

2. Storage shelving unit according to Claim 1,
characterised in that
the wheels (12) are arranged on the lower corners of the frame (5, 6, 7) and the paths of movement are formed as track rails (13) for the wheels.

3. Storage shelving unit according to Claim 1,
characterised in that
the traction means (27, 28) are formed as cables and the second reversing wheels (14, 16, 18, 20) as cable pulleys.

4. Storage shelving unit according to Claim 1,
characterised in that
the traction means (27, 28) are attached to the shelving unit (1) or to the second part (29) with interposition of a tension spring (31, 32).

5. Storage shelving unit according to Claim 1,
characterised in that
the substantially vertically extending section, not affected by the reversal over the toothed wheels (15, 17, 19, 21) and the reversing wheels (14, 16, 18, 20), of the chains (22, 23), and the traction means (27, 28), is formed as a rod.

6. Storage shelving unit according to Claim 1, 4 or 5,
characterised in that
the traction means (27, 28) are formed as gear chains and the second reversing wheels (14, 16, 18, 20) are formed as chain gear wheels.

**Revendications**

1. Rayonnage de stockage possédant des étagères définissant des compartiments (2) superposés en alignement et un dispositif de magasinage et d'enlèvement de pièces (3) de ces compartiments, dispositif qui comprend, parallèlement à un côté du rayonnage et à distance de lui, un châssis (5, 6, 7) formé de deux montants verticaux (5) et de poutres (6, 7) reliant ces montants en haut et/ou en bas, de même qu'une traverse horizontale de manutention (8) déplaçable verticalement sur les montants (5) et portant des moyens de préhension (10) pour les pièces (3), moyens qui sont dirigés vers le rayonnage, le châssis (5, 6, 7) pouvant être approché et écarté du rayonnage, avec maintien de sa position verticale, par des roues (12) montées rotatives sur lui et se déplaçant le long de trajets de mouvement (13) parallèles, s'étendant horizontalement et à angle droit à partir du rayonnage (1),
caractérisé en ce
que le châssis comporte une paire de roues de renvoi (14, 15; 16, 17; 18, 19; 20, 21) montées rotatives dans la région de chacune des extrémités supérieures et inférieures des deux montants (5), que toutes les roues de renvoi supérieures sont rotatives autour d'un axe commun et toutes les roues de renvoi inférieures sont rotatives autour d'un axe commun, qu'une première roue (16, 17, 19, 21) de chacune des paires de roues de renvoi est une roue dentée, toutes les roues dentées étant identiques entre elles et les roues dentées disposées l'une au-dessus de l'autre étant alignées mutuellement en direction verticale et étant en prise avec une chaîne pour roues dentées (22, 23), les chaînes s'enroulant essentiellement du côté dirigé vers le rayonnage autour des roues dentées supérieures (19, 21) et s'enroulant essentiellement du côté opposé au rayonnage autour des roues dentées inférieures (15, 17), l'extrémité inférieure de chaque chaîne étant orientée horizontalement et attachée fixe au rayonnage (1), tandis que l'extrémité supérieure, orientée horizontalement, est attachée fixe à une première pièce (25) située sur des entretoises (26) du côté du châssis situé à l'opposé du rayonnage lorsque le châssis est éloigné au maximum du rayonnage, que les secondes roues de renvoi (14, 16, 18, 20), identiques entre elles et dont celles disposées l'une au-dessus de l'autre sont mutuellement alignées verticalement, sont en prise avec un moyen de traction (27, 28), les moyens de traction s'enroulant essentiellement du côté opposé au rayonnage autour des roues de renvoi supérieures (18, 20) et essentiellement du côté dirigé vers le rayonnage autour des roues de renvoi inférieures (14, 16), l'extrémité supérieure de chaque moyen de traction étant orientée horizontalement et attachée fixe au rayonnage (1), tandis que son extrémité inférieure, orientée horizontalement, est attachée fixe à une seconde pièce (29) située du côté du châssis opposé au rayonnage lorsque le châssis est éloigné au maximum du rayonnage, et que les roues dentées supérieures (19, 21) et/ou inférieures (15, 17) sont solidarisées en rotation avec un arbre commun (33).

2. Rayonnage de stockage selon la revendication 1,
caractérisé en ce
que les roues (12) sont placées aux angles inférieurs du châssis (5, 6, 7) et les trajets de mouvement sont définis par des rails de roulement (13) pour les roues.

3. Rayonnage de stockage selon la revendication 1,
caractérisé en ce
que les moyens de traction (27, 28) sont des câbles et les secondes roues de renvoi (14, 16, 18, 20) sont des poulies à câble.

4. Rayonnage de stockage selon la revendication 1,
caractérisé en ce
que les moyens de traction (27, 28) sont attachés au rayonnage (1) ou à la seconde pièce (29) avec interposition d'un ressort de tension (31, 32).

5. Rayonnage de stockage selon la revendication 1,
caractérisé en ce
que le tronçon des chaînes (22, 23) et des moyens de traction (27, 28) orienté pour l'essentiel verticalement et ne passant par les roues dentées (15, 17, 19, 21) ou les secondes roues de renvoi (14, 16, 18, 20), est constitué par une tige.

6. Rayonnage de stockage selon la revendication 1, 4 ou 5,
caractérisé en ce
que les moyens de traction (27, 28) sont des chaînes pour roues dentées et les secondes roues de renvoi (14, 16, 18, 20) sont des roues à chaîne.